# NEUE EUROPÄISCHE PATENTSCHRIFT

(11) **EP 1 427 563 B2**
(45) Veröffentlichungstag und Bekanntmachung des Hinweises auf die Entscheidung über den Einspruch: **04.08.2010**
(45) Hinweis auf die Patenterteilung: 11.01.2006
(21) Anmeldenummer: 02779434.6
(22) Anmeldetag: 27.09.2002
(51) Int. Cl.: B23K 26/067, B23K 26/08, G02B 26/12, B23K 26/38

(54) **VORRICHTUNG ZUR SUBSTRATBEHANDLUNG MITTELS LASERSTRAHLUNG**
DEVICE FOR SUBSTRATE TREATMENT BY MEANS OF LASER RADIATION
DISPOSITIF DE TRAITEMENT DE SUBSTRAT AU MOYEN D'UN RAYONNEMENT LASER

(30) Priorität: 07.11.2001 DE 10154508
(43) Veröffentlichungstag der Anmeldung: 16.06.2004
(73) Patentinhaber: MLT Micro Laser Technology GmbH, 85551 Kirchheim (DE)
(72) Erfinder: PAUL, Helmut, 85221 Dachau (DE); HERRMANN, Walter, 81476 München (DE)
(74) Vertreter: Manitz, Finsterwald & Partner GbR
(86) Internationale Anmeldenummer: PCT/EP2002/010892
(87) Internationale Veröffentlichungsnummer: WO 2003/039803

(56) Entgegenhaltungen:
- EP-A- 0 549 357
- EP-A1- 0 549 357
- WO-A1-01//10594
- DE-A- 2 918 283
- DE-A1- 2 918 283
- DE-A1- 3 728 660
- DE-A1- 19 807 761
- US-A- 5 867 298
- US-B1- 6 292 285
- US-B1- 6 292 285
- PATENT ABSTRACTS OF JAPAN vol. 014, no. 115 (C-0696), 5. März 1990 (1990-03-05) & JP 01 316415 A (NIPPON STEEL CORP), 21. Dezember 1989 (1989-12-21)
- PATENT ABSTRACTS OF JAPAN Bd. 014, Nr. 115 (C-0696) & JP 01 316415 05 März 1990
- PATENT ABSTRACTS OF JAPAN & JP 05 232393 10 September 1993

## Beschreibung

Die Erfindung betrifft eine Vorrichtung zur Substratbehandlung mittels Laserstrahlung, mit einem Polygon-Drehspiegel, durch den wenigstens ein einfallender Laserstrahl reflektiert wird und über eine Anordnung von nebeneinander liegenden Sammellinsen schwenkbar ist, die in einem ihrer Brennweite entsprechenden Abstand vom Substrat angeordnet sind.

Eine derartige Vorrichtung wird insbesondere zum Bearbeiten von beispielsweise bandförmigen Materialien mittels Laserstrahlung verwendet, wobei das Laserlicht in mehrere quasi-simultane Bearbeitungsstellen aufgeteilt und gleichzeitig aus dem Dauerlicht des Lasers kurze Pulse sehr hoher Frequenz erzeugt werden. Die hohe Pulswiederholungsrate resultiert in entsprechend hohen Bearbeitungsgeschwindigkeiten.

Eine Strahlaufteilung durch sogenannte Strahlteiler wäre insoweit nachteilig, als die resultierenden Teilstrahlen eine entsprechend geringere Intensität aufweisen würden, die für bestimmte Bearbeitungsverfahren nicht ausreichend ist. Überdies würden die Teilstrahlen auch eine wechselnde, d. h. jedenfalls unterschiedliche Intensität und/oder räumliche Intensitätsverteilung aufweisen. So ist bei Strahlteilern häufig die unterschiedliche Beeinflussung des Strahlprofiles das Hauptproblem, insbesondere bei Verschmutzung (Strahlgeometrie).

Beispielsweise bei der Perforierung von Papier mittels Laserlichtstrahlen ist es zur Erzielung einer gleichmäßigen Lochgröße und Güte unbedingt erforderlich, eine bestimmte, relativ hohe und gleichbleibende Intensität des die Perforation durchführenden Laserlichtstrahls sicherzustellen. Eine Strahlteilung wäre somit auch hier wieder ungünstig.

Vorrichtungen der eingangs genannten Art (vgl. z. B. DE-C-2918283) werden insbesondere zur Perforation von dünnen Papieren wie beispielsweise Zigarettenmundstückpapier verwendet. Dabei erzeugt die Vorrichtung pro Bearbeitungskopf jeweils eine Spur von kleinen Löchern, wobei das Dauerlicht des Lasers mit Hilfe eines optischen Multiplexers in gepulste Einzelstrahlen zerhackt wird. Jeder fokussierte Laserpuls verdampft schlagartig das dünne Material und erzeugt somit ein Loch mit einem üblichen Durchmesser von beispielsweise etwa 60 bis etwa 150 µm. Eine betreffende Vorrichtung kann z. B. 16 Bearbeitungsköpfe aufweisen und somit Papier mit beispielsweise vier Perforationszonen mit jeweils vier Lochreihen und einer dazu passenden Breite von etwa 150 mm bei mehreren 100 m/min Bahngeschwindigkeit perforieren. Die Perforation ist demnach auf wenige Zonen quer zur Bahn konzentriert und in Längsrichtung sehr dicht angeordnet.

In der Praxis ist es immer wieder erforderlich, die Anzahl von Facetten zu ändern. Dazu muß bisher das zusammen mit dem Antriebsmotor komplett montierte und gewuchtete Polygon ausgetauscht und das neue Polygon von neuem justiert werden. Dieser mehrere Stunden dauernde Vorgang ist für den Endkunden lästig, da nur erfahrenes und trainiertes Personal die betreffende fehlerträchtige Arbeit durchführen kann. In der Praxis führt dies dazu, daß ein Austausch des Polygones nur ungern und sehr selten durchgeführt wird.

Mit einem jeweiligen Polygontausch und einer entsprechend veränderten Anzahl von Facetten kann nun aber der Überstreich- oder Fächerwinkel des reflektierten Laserstrahls und somit die Anzahl der belichteten und damit perforierenden Einzelstrahlen verändert werden. In der Regel geht es hierbei um die Optimierung der Produktionsgeschwindigkeit. Werden beispielsweise nur acht Strahlen, d. h. zum Beispiel acht Perforationsspuren, benötigt und ist die betreffende Maschine mit einem Polygon ausgestattet, das beispielsweise alle sechzehn vorhandenen Einzelpfade belichtet, müssen ohne Umbau auf ein entsprechend anderes Polygon gleich acht der sechzehn Strahlenpfade blockiert werden. Damit sind 50 % der ursprünglichen Laserenergie nicht für die Bearbeitung verfügbar. Zum Blockieren oder Unterdrücken einzelner Strahlen sind die bisher üblichen Perforationsmaschinen des entsprechenden Typs mit sogenannten Einzelstrahlverschlüssen oder Shuttern, d. h. zum Beispiel sechzehn solchen Shuttern, versehen.

Falls die vom Endbenutzer zu produzierende Produktionsmenge sehr hoch ist und die für das betreffende Perforationsprodukt zur Verfügung stehende Produktionszeit beispielsweise mehrere Wochen beträgt, wird in der Praxis bisher der aufwendige Umbau auf ein Polygon gewählt, das Laserlicht nur auf die z. B. acht benötigten Strahlen auffächert, um die ganze zur Verfügung stehende Laserenergie auszunutzen.

Der Erfindung liegt allgemein die Aufgabe zugrunde, eine Vorrichtung der im Oberbegriff des Anspuchs 1 anzugeben, bei der unter Aufrechterhaltung einer gleichmäßigen Größe der behandelten Stellen bzw. Lochgröße und optimaler, gleichmäßiger Ausnutzung der Laserenergie auf einfache und schnelle Weise die Anzahl der einzelnen Sperren von Behandlungsstellen bzw. Perforationsspuren varrierbar ist.

Ein Ziel der Erfindung ist es, eine verbesserte Vorrichtung der eingangs genannten Art zu schaffen, die bei auf ein Minimum reduziertem Aufwand einen schnelleren Wechsel der Facettenanzahl und entsprechend des Überstreich- oder Fächerwinkels des reflektierten Laserstrahles gestattet. Dabei soll ein jeweiliger Wechsel insbesondere auch während des Betriebs der Vorrichtung möglich sein.

Dieses Ziel wird erfindungsgemäß durch die Merkmale des Anspruchs 1 erreicht.

Aufgrund dieser Ausbildung ist es bei minimalem Aufwand beispielsweise möglich, sehr schnell und praktisch während der Produktion zwischen zwei oder mehreren bezüglich ihrer Facettenzahl unterschiedlichen Polygonspiegelbereichen umzuschalten. Dabei kann der Polygon-Drehspiegel insbesondere mittels einer motorischen oder manuell betätigbaren Positioniereinrichtung verstellbar sein.

Erfindungsgemäß sind die eine unterschiedliche Anzahl von Facetten aufweisenden Bereiche in Richtung der Drehachse des Polygon-Drehspiegels hintereinander angeordnet sind und daß der Polygon-Drehspiegel in Richtung dieser Drehachse verstellbar ist. Der Polygon-Drehspiegel kann beispielsweise aus Scheiben zusammengesetzt sein, durch die die eine unterschiedliche Anzahl von Facetten aufweisenden Bereiche gebildet sind. Es ergibt sich somit eine frei konfigurierbare Mehrfachpolygon-Optik, bei der beispielsweise entsprechend Hantelgewichten verschiedene Polygone kombiniert werden können. So können beispielsweise zwei oder drei oder noch mehr verschiedene Polygone miteinander kombiniert werden.

Grundsätzlich ist jedoch auch eine einstückige Polygon-Drehspiegel-Ausführung denkbar, wobei die sich hinsichtlich ihrer Facettenanzahl unterschiedlichen Bereiche durch entsprechende Abschnitte dieses einstückigen Polygon-Drehspiegels gebildet sind.

Die Erfindung zeichnet sich ferner dadurch aus, daß der einfallende Laserstrahl durch eine Linse auf den Polygon-Drehspiegel fokussiert wird und daß zwischen dem Polygon-Drehspiegel und der Anordnung von in einem genau oder ungefähr ihrer Brennweite entsprechenden Abstand vom Substrat angeordneten nebeneinander liegenden Sammellinsen eine weitere Anordnung von nebeneinander liegenden Sammellinsen vorgesehen ist, die in einem genau oder ungefähr ihrer Brennweite entsprechenden Abstand vom Polygon-Drehspiegel angeordnet sind.

Die Linsen, zwischen denen der Polygon-Drehspiegel liegt, können z. B. sphärische und/oder zylindrische Sammellinsen sein. Dabei besitzen sphärische Linsen den Vorteil, daß die benötigte Reflexionsfläche /-breite auf dem Polygon und damit das Gewicht und entsprechend die Massenträgheit klein gehalten werden können.

Zwischen den beiden Anordnungen von nebeneinanderliegenden Sammellinsen sind Umlenkspiegel angeordnet sein.

In vielen Fällen ist es auch von Vorteil, wenn die Drehachse des Polygon-Drehspiegels bzw. eines jeweiligen Spiegelbereiches gegenüber der zum einfallenden Laserstrahl senkrechten Ebene verkippt ist.

Mittels eines speziellen Polygonspiegels, der in verschiedene Bereiche unterteilt ist und in diesen Bereichen jeweils eine unterschiedliche Facettenanzahl aufweist, kann somit über eine motorische oder manuelle Positioniereinrichtung praktisch im laufenden Betrieb, z. B. innerhalb von Sekunden, der Fächerwinkel des Strahlenmultiplexers verstellt und somit sozusagen auf "Knopfdruck" eine andere Anzahl von Perforationsstrahlen bei gleichzeitiger Ausnutzung der Laserenergie eingestellt werden.

Mit der Verwendung eines Polygon-Drehspiegels mit zumindest zwei eine unterschiedliche Anzahl von Facetten aufweisenden Bereichen ist insbesondere eine rasche Anpassung der belichteten und damit perforierenden Strahlengänge bzw. Perforationsspuren möglich.

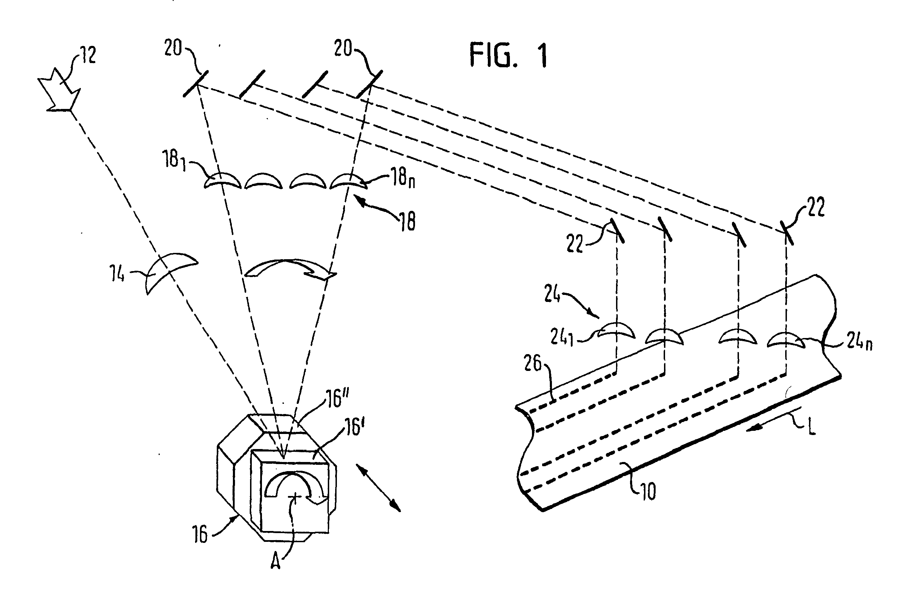

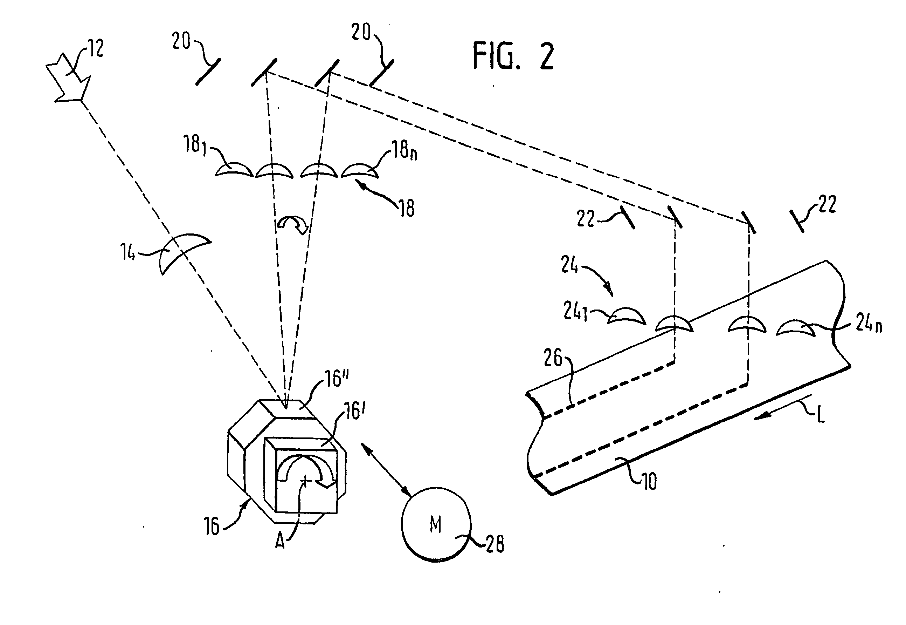

Die Erfindung wird im folgenden anhand eines Ausführungsbeispiels unter Bezugnahme auf die Zeichnung näher erläutert wobei die Figuren 1 und 2 lediglich der näheren Erläuterung der Erfindung dienen in dieser zeigen:
- Fig. 1: eine schematische, vereinfachte Darstellung einer Vorrichtung zur Substratbehandlung mittels Laserstrahlung, wobei der Polygon-Drehspiegel eine solche Position einnimmt, daß alle Umlenkspiegel überstrichen werden,
- Fig. 2: die Vorrichtung gemäß Figur 1, wobei der Polygon-Drehspiegel jedoch eine solche Position einnimmt, daß nur ein Teil der Umlenkspiegel überstrichen wird,
- Fig. 3: eine vergrößerte Darstellung einer weiteren Ausführungsform eines zwei Bereiche unterschiedlicher Facettenanzahl aufweisenden Polygon-Drehspiegels der erfindungsgemäßen Vorrichtung.

Die Figuren 1 und 2 zeigen in schematischer, vereinfachter Darstellung eine Vorrichtung zur Behandlung eines Substrats 10, hier einer in Transportrichtung L bewegten Materialbahn wie insbesondere einer Verpackungsfolie oder einer Papierbahn, mittels Laserstrahlung. Dabei durchläuft der von einem Laser 12 kommende Lichtstrahl eine Eintritts- oder Sammellinse 14, deren Brennpunkt bzw. Strichebene auf einer Fläche eines im Strahlengang hinter der Sammellinse 14 angeordneten Polygon-Drehspiegels 16 liegt.

Der Polygon-Drehspiegel 16 ist in mehrere, hier beispielsweise zwei eine unterschiedliche Anzahl von Facetten aufweisende Bereiche 16', 16" unterteilt. Im vorliegenden Fall besitzt der Bereich 16' beispielsweise vier Facetten und der Bereich 16" beispielsweise acht Facetten.

Der Polygon-Drehspiegel 16 ist so verstellbar, daß die unterschiedlichen Bereiche 16' bzw. 16" in den Strahlengang der Laserstrahlung eingebracht werden können, und entsprechend unterschiedliche Überstreich- oder Fächerwinkel des vom Polygon-Drehspiegels 16 reflektierten Laserstrahls einstellbar sind. Hierbei ist der Polygon-Drehspiegel 16 insbesondere mittels einer motorischen oder manuell betätigbaren Positioniereinrichtung verstellbar.

Wie anhand der Figuren 1 und 2 zu erkennen ist, sind die eine unterschiedliche Anzahl von Facetten aufweisenden Bereiche 16', 16" in Richtung der Drehachse A des Polygon-Drehspiegels 16 hintereinander angeordnet. Entsprechend ist der Polygon-Drehspiegel 16 in Richtung dieser Drehachse A verstellbar.

Der Polygon-Drehspiegel 16 kann beispielsweise aus Scheiben zusammengesetzt sein, durch die die eine unterschiedliche Anzahl von Facetten aufweisenden Bereichen 16', 16" gebildet sind. Grundsätzlich ist jedoch auch eine einstückige Ausführung des Polygon-Drehspiegels 16 denkbar.

Im vorliegenden Fall besitzt der Bereich 16' beispielsweise vier und der Bereich 16" beispielsweise acht Facetten.

Grundsätzlich ist jedoch auch eine andere Anzahl von Facetten möglich. Sie hängt für eine vorgegebene Zerhackungsfrequenz auch von der mit dem Polygon-Drehspiegel 16 erreichbaren Drehzahl ab. So verwendet man in der Praxis bei gleichem Polygondurchmesser verschiedene Facetten-Anzahlen und die gleiche maximale Drehzahl. Ein wichtiges Kriterium bei der Wahl der Facetten bzw. Facetten-Anzahl ist der gewünschte Fächerwinkel, d.h. die gewünschte Einzelstrahl-Anzahl, die gleich der Anzahl von Perforationsspuren ist.

Bei sich drehendem Polygon-Drehspiegel 16 wird der einfallende, reflektierte Licht- bzw. Laserstrahl über eine Anordnung 18 von nebeneinander liegenden Kollimator- oder Sammellinsen 18₁ - 18ₙ verschwenkt. Trifft der einfallende Laserstrahl auf die nächste Facette des Polygon-Drehspiegels 16, so springt der reflektierte Strahl zurück und überstreicht von neuem den betreffenden, die Sammellinsen 18₁ - 18ₙ umfassenden Winkelbereich.

Die eine gleiche Brennweite aufweisenden Sammellinsen 18₁ - 18ₙ sind so angeordnet, daß ihr Brennpunkt beziehungsweise ihre Brennebene mit dem Brennpunkt beziehungsweise der Brennebene der Sammellinse 14 auf dem Polygon-Drehspiegel 16 ungefähr oder genau zusammenfällt. Das die Sammellinsen 18₁ - 18ₙ verlassende Licht ist daher wieder annähernd parallel gerichtet.

Die Sammellinse 14 und die Sammellinsen 18₁ - 18ₙ können beispielsweise als sphärische und/oder zylindrische Linsen vorgesehen sein.

Die die Linsenanordnung 18 verlassenden Lichtstrahlen werden beim vorliegenden Ausführungsbeispiel über Umlenkspiegel 20, 22 auf eine Anordnung von nebeneinander liegenden Fokussier- oder Sammellinsen 24₁ *-* 24ₙ gerichtet, die in einem ungefähr ihrer Brennweite entsprechenden Abstand vom Substrat 10 angeordnet sind. Dabei umfaßt diese Linsenanordnung 24 vorzugsweise sphärische Sammellinsen 24₁ - 24ₙ, die die auf sie auftreffenden parallelen Lichtstrahlen auf das im Strahlengang hinter dem Linsensystem 24 liegende Substrat 10 fokussieren. Die Größe der Einzellinsen 24₁ - 24ₙ des Linsensystems 24 entspricht vorzugsweise der Größe der Einzellinsen 18₁ - 18ₙ des Linsensystems 18, so daß jedem Linsenabschnitt der Linsen 18₁ - 18ₙ ein entsprechender Abschnitt der Linsen 24₁ - 24ₙ zugeordnet ist.

Im vorliegenden Fall beträgt die Anzahl der Sammellinsen 18₁ - 18ₙ, Umlenkspiegel 20, Umlenkspiegel 22 und Sammellinsen 24₁ - 24ₙ jeweils sechzehn.

In der Darstellung gemäß Figur 1 nimmt der Polygon-Drehspiegel 16 eine solche Position ein, daß der einfallende Laserstrahl auf den hier beispielsweise vier Facetten aufweisenden Bereich 16' des Polygon-Drehspiegels 16 auftrifft. Es werden hier alle sechzehn Sammellinsen 18₁ - 18ₙ und Umlenkspiegel 20 überstrichen. Entsprechend ergeben sich in dem Substrat 10 sechzehn Perforationsspuren 26.

In der Darstellung gemäß Figur 2 ist der Polygon-Drehspiegel 16 dagegen so positioniert, daß der einfallende Laserstrahl auf den hier beispielsweise acht Facetten aufweisenden Bereich 16" auftrifft. Damit werden im vorliegenden Fall nur acht Sammellinsen 18₁ - 18ₙ und acht Umlenkspiegel 20 überstrichen, so daß sich in dem Substrat 10 entsprechend nur acht Perforationsspuren 26 ergeben.

Wie anhand der Figur 2 zu erkennen ist, kann der Polygon-Drehspiegel 16 beispielsweise mittels eines motorischen Antriebs 28 entsprechend verstellt werden.

Die eine unterschiedliche Anzahl von Facetten aufweisenden Bereiche 16', 16" können auf einer gemeinsamen Achse A vorgesehen sein.

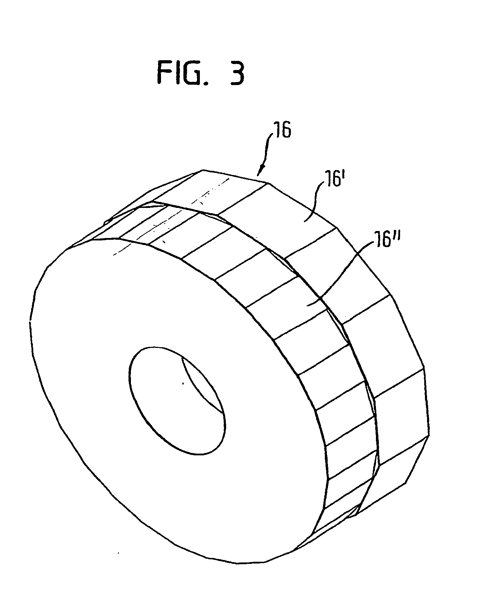

Figur 3 zeigt in vergrößerter Darstellung eine weitere Ausführungsform eines zwei Bereiche 16', 16" unterschiedlicher Facettenanzahl aufweisenden Polygon-Drehspiegels 16. Im vorliegenden Fall ist eine deutlich höhere Anzahl von Facetten als bei den zuvor beschriebenen Ausführungsformen vorgesehen.

Bei der in Figur 3 dargestellten beispielhaften Ausführungsform befinden sich die beiden Bereiche 16', 16" wieder auf einer gemeinsamen Achse. durch getrennte Antriebe angetrieben sein.

### Bezugszeichenliste

- 10: Substrat
- 12: Laser
- 14: Eintritts- oder Sammellinse
- 16: Polygon-Drehspiegel
- 18: Linsenanordnung
- 18₁ - 18ₙ: Sammellinsen
- 20: Umlenkspiegel
- 22: Umlenkspiegel
- 24: Linsenanordnung
- 24₁ - 24ₙ: Sammellinsen
- 26: Perforationsspur
- 28: motorischer Antrieb
- 30: Senkrechte
- A: Drehachse

## Patentansprüche

1. Vorrichtung zur Substratbehandlung mittels Laserstrahlung, mit einem Polygon-Drehspiegel (16), durch den wenigstens ein als Dauerlicht einfallender Laserstrahl reflektiert wird und über eine erste Anordnung (24) von nebeneinander liegenden Sammellinsen (24₁-24ₙ) schwenkbar ist, die in einem genau oder ungefähr ihrer Brennweite entsprechenden Abstand vom bewegten, insbesondere durch eine Material-bahn gebildeten Substrat (10) angeordnet sind, wobei der einfallende Laserstrahl durch eine Linse (14) auf den Polygon-Drehspiegel (16) fokussiert ist und das reflektierte Laserlicht im Anschluss and den Polygon-Drehspiegel (16) zunächst wieder parallelisiert wird, indem zwischen dem Polygon-Drehspiegel (16) und der ersten Anordnung (24) von in einem genau oder ungefähr ihrer Brennweite entsprechenden Abstand vom Substrat (10) angeordneten nebeneinander liegenden Sammellinsen (24₁- 24ₙ) eine weitere Anordnung (18) von nebeneinander liegenden Sammellinsen (18₁ - 18ₙ) vorgesehen ist, die in einem genau oder ungefähr ihrer Brennweite entsprechenden Abstand vom Polygon-Drehspiegel (16) angeordnet sind, wobei die die weitere Anordnung (18) von nebeneinander liegenden Sammellinsen (18₁-18ₙ) verlassenden Lichtstrahlen über Umlenkspiegel (20,22) auf die erste Anordnung (24) von nebeneinander liegenden Sammellinsen (24₁-24ₙ) gerichtet werden,
**dadurch gekennzeichnet,**
**dass** der Polygon-Drehspiegel (16) in zumindest zwei eine unterschiedliche Anzahl von Facetten aufweisende Bereiche (16', 16") gleichen Durchmessers und gleicher maximaler Drehzahl unterteilt ist und dass der Polygon-Drehspiegel (16) so verstellbar ist, dass un- terschiedliche Bereiche (16', 16") in den Strahlengang der Laserstrahlung einbringbar und entsprechend unterschiedliche Oberstreich- oder Fächerwinkel des vom Polygon-Drehspiegel (16) reflektierten Laserstrahles einstellbar sind, so dass der Laserstrahl über eine entsprechend unterschiedliche Anzahl von nebeneinander liegenden Sammellinsen (18₁-18ₙ) der weiteren Anordnung (18) verschwenkt wird, der Laserstrahl über eine entsprechend unterschiedliche Anzahl von nebeneinander liegenden Sammellinsen (24₁-24ₙ) der ersten Sammellinsen-Anordnung (24) verschwenkt wird und eine entsprechend unterschiedliche Anzahl von Umlenkspiegeln (20,22) überstrichen, wobei die eine unterschiedliche Anzahl von Facetten aufweisenden Bereiche (16', 16") sich auf einer gemeinsamen Drehachse (A) befinden, in Richtung dieser Drehachse (A) des Polygon-Drehspiegels (16) hintereinander angeordnet sind und der Polygon-Drehspiegel (16) in Richtung dieser Drehachse (A) verstellbar ist.

2. Vorrichtung nach Anspruch 1,
**dadurch gekennzeichnet,**
**daß** der Polygon-Drehspiegel (16) mittels einer motorischen oder manuell betätigbaren Positioniereinrichtung verstellbar ist.

3. Vorrichtung nach Ansprüche 1 oder 2,
**dadurch gekennzeichnet,**
**daß** der Polygon-Drehspiegel (16) aus Scheiben zusammengesetzt ist, durch die die eine unterschiedliche Anzahl von Facetten aufweisenden Bereiche (16', 16") gebildet sind.

4. Vorrichtung nach einem der Ansprüche 1 oder 2,
**dadurch gekennzeichnet,**
**daß** der Polygon-Drehspiegel (16) einstückig ausgeführt ist.

5. Vorrichtung nach einem der vorhergehen Ansprüche,
**dadurch gekennzeichnet,**
**daß** der Polygon-Drehspiegel (16) während des Betriebs der Vorrichtung verstellbar ist.

6. Vorrichtung nach einem der vorhergehenden Ansprüche,
**dadurch gekennzeichnet,**
**daß** die Linsen (14, 18₁ - 18ₙ), zwischen denen der Polygon-Drehspiegel (16) liegt, sphärische und/oder zylindrische Sammellinsen sind.

7. Vorrichtung nach einem der vorhergehenden Ansprüche,
**dadurch gekennzeichnet,**
**dass** die Drehachse (A) des Polygon-Drehspiegels (16) bzw. eines jeweiligen Bereiches (16', 16") gegenüber der zum einfallenden Laserstrahl senkrechten Ebene verkippt ist.

## Claims

1. An apparatus for substrate treatment by means of laser radiation comprising a rotatable polygonal mirror (16) by which at least one laser beam incident as continuous light is reflected and can be swept via a first arrangement (24) of converging lenses (24₁ - 24ₙ) which lie next to one another and which are arranged at a spacing corresponding precisely or approximately to their focal lengths from the moved substrate (10), in particular formed by a material web, wherein the incident laser beam is focused onto the rotatable polygonal mirror (16) by a lens (14) and the reflected laser light is first parallelized again following the rotatable polygonal mirror (16) in that a further arrangement (18) of converging lenses (18₁- 18ₙ) which lie next to one another and which are arranged at a spacing corresponding precisely or approximately to their focal lengths from the rotatable polygonal mirror (16) is provided between the rotatable polygonal mirror (16) and the first arrangement (24) of converging lenses (24₁- 24ₙ) which lie next to one another and which arranged at a spacing from the substrate (10) corresponding precisely or approximately to their focal lengths, wherein the light beams exiting the further arrangement (18) of converging lenses (18ᵢ- 8ₙ) which lie next to one another are directed via deflection mirrors (20, 22) to the first arrangement (24) of converging lenses (24₁- 24ₙ) lying next to one another
**characterized in that**,
the rotatable polygonal mirror (16) is divided into at least two regions (16', 16") of the same diameter and the same maximum speed and having a different number of facets; and **in that** the rotatable polygonal mirror (16) is adjustable such that different regions (16', 16") can be introduced into the beam path of the laser radiation and correspondingly different sweep angles or fan angles of the laser beam reflected by the rotatable polygonal mirror (16) can be set so that the laser beam is swept via a correspondingly different number of converging lenses (18₁ - 18ₙ), which lie next to one another, of the further arrangement (18), the laser beam being swept via a correspondingly different number of converging lenses (24₁ - 24ₙ), which lie next to one another, of the first converging lens arrangement (24) and a correspondingly different number of deflection mirrors (20, 22) is swept over, wherein the regions (16', 16") having a different number of facets are located on a common axis of rotation (A) and are arranged behind one another in the direction of this axis of rotation (A) of the rotatable polygonal mirror (16) and wherein the rotatable polygonal mirror (16) is adjustable in the direction of this axis of rotation (A).

2. An apparatus in accordance with claim 1, **characterized in that** the rotatable polygonal mirror (16) can be adjusted by means of a positioning device actuable by motor or manually.

3. An apparatus in accordance with claim 1 or claim 2, **characterized in that** the rotatable polygonal mirror (16) is assembled from plates by which the regions (16', 16") having a different number of facets are formed.

4. An apparatus in accordance with one of the claims 1 or 2, **characterized in that** the rotatable polygonal mirror (16) is made in one piece.

5. An apparatus in accordance with any one of the preceding claims, **characterized in that** the rotatable polygonal mirror (16) is adjustable during the operation of the apparatus.

6. An apparatus in accordance with any one of the preceding claims, **characterized in that** the lenses (14, 18₁- 18ₙ) between which the rotatable polygonal mirror (16) lies, are spherical and/or cylindrical converging lenses.

7. An apparatus in accordance with any one of the preceding claims, **characterized in that** the axis of rotation (A) of the rotatable polygonal mirror (16) or of a respective region (16', 16") is tilted with respect to the plane perpendicular to the incident laser beam.

## Revendications

1. Dispositif de traitement de substrat au moyen d'un rayonnement laser, comportant un miroir polygonal rotatif (16) par lequel au moins un rayon laser incident sous forme de lumière permanente est réfléchi et qui est pivotant via un premier agencement (24) de lentilles convergentes (24₁- 24ₙ) disposées les unes à côté des autres, lesquelles sont agencées à une distance du substrat (10) mobile, formé en particulier par une nappe de matériau, qui correspond exactement ou approximativement à leur distance focale, dans lequel le rayon laser incident est focalisé par une lentille (14) sur le miroir polygonal rotatif (16), et à la suite du miroir polygonal rotatif (16) la lumière laser réfléchie est tout d'abord à nouveau rendue parallèle, en prévoyant, entre le miroir polygonal rotatif (16) et le premier agencement (24) de lentilles convergentes (24₁- 24ₙ) disposées les unes à côté des autres et agencées à une distance du substrat (10) qui correspond exactement ou approximativement à leur distance focale, un autre agencement (18) de lentilles convergentes (18₁-18ₙ) situées les unes à côté des autres et agencées à une distance au miroir polygonal rotatif (16) qui correspond exactement ou approximativement à leur distance focale, de sorte que les rayons lumineux qui quittent l'autre agencement (18) de lentilles convergentes (18₁ - 18ₙ) situées les unes à côté des autres sont dirigés par des miroirs de renvoi (20, 22) vers le premier agencement (24) de lentilles convergentes (24₁- 24ₙ),
**caractérisé en ce que**
le miroir polygonal rotatif (16) est subdivisé en au moins deux régions (16, 16") présentant des nombres différents de facettes, avec le même diamètre et la même vitesse de rotation maximale, et **en ce que** le miroir polygonal rotatif (16) est déplaçable de telle sorte que différentes régions (16', 16") peuvent être introduites dans la trajectoire du rayonnement laser, et en correspondance différents angles de couverture ou angles en éventail du rayon laser réfléchi par le miroir polygonal rotatif (16) peuvent être réglés, de sorte que le rayon laser est pivoté sur un nombre différent correspondant de lentilles convergentes (18₁- 18ₙ) situées les unes à côté des autres de l'autre agencement (18), que le rayon laser est pivoté sur un nombre différent de lentilles convergentes (24₁ - 24ₙ) situées les unes à côté des autres du premier agencement de lentilles convergentes (24), et balaye un nombre différent correspondant de miroirs de renvoi (20, 22), et dans lequel les régions (16', 16") présentant différents nombres de facettes se trouvent sur un axe de rotation (A) commun, sont agencées les unes derrière les autres en direction de cet axe de rotation (A) du miroir polygonal rotatif (16), et le miroir polygonal rotatif (16) est déplaçable en direction de cet axe de rotation (A).

2. Dispositif selon la revendication 1,
**caractérisé en ce que**
le miroir polygonal rotatif (16) est déplaçable au moyen d'un système de positionnement à actionnement motorisé ou manuel.

3. Dispositif selon l'une des revendications 1 ou 2,
**caractérisé en ce que**
le miroir polygonal rotatif (16) est composé de plaques qui sont formées par les régions (16', 16") présentant différents nombres de facettes.

4. Dispositif selon l'une des revendications 1 ou 2,
**caractérisé en ce que**
le miroir polygonal rotatif (16) est réalisé d'un seul tenant.

5. Dispositif selon l'une des revendications précédentes,
**caractérisé en ce que**
le miroir polygonal rotatif (16) est déplaçable pendant le fonctionnement du dispositif.

6. Dispositif selon l'une des revendications précédentes,
**caractérisé en ce que**
les lentilles (14, 18₁ - 18ₙ) entre lesquelles se trouve le miroir polygonal rotatif (16) sont des lentilles convergentes sphériques et/ou cylindriques.

7. Dispositif selon l'une des revendications précédentes,
**caractérisé en ce que**
l'axe de rotation (A) du miroir polygonal rotatif (16) ou d'une région respective (16', 16") est incliné par rapport au plan perpendiculaire au rayon laser incident.
